# EUROPÄISCHE PATENTANMELDUNG

(11) **EP 0 672 594 A1**
(43) Veröffentlichungstag der Anmeldung: **20.09.1995**
(21) Anmeldenummer: 95101128.7
(22) Anmeldetag: 27.01.1995
(51) Int. Cl.: B65G 47/28

(54) **Fördereinrichtung für Vereinzelung**

(30) Priorität: 17.03.1994 DE 4409215
(71) Anmelder: Hans Märtens GmbH & Co. KG, D-24937 Flensburg (DE)
(72) Erfinder: Streit, Günter, D-24944 Flensburg (DE); Junge, Dieter, D-24939 Flensburg (DE)
(74) Vertreter: Hansmann, Dierk, Dipl.-Ing.

(57) **Zusammenfassung**

Die Fördereinrichtung dient zur Vereinzelung von Produkten und ist im wesentlichen als ein flexibles Transportband ausgebildet. Das Transportband (1) leitet die Produkte (9) in einer Förderrichtung (7). Das Transportband ist entlang eines als Expansionsstrecke (3) ausgebildeten Teiles des Förderweges in einer Querrichtung (6) von einer Spreizeinrichtung expandierbar. Entlang eines Teiles eines Rückführweges kontrahiert das Transportband auf eine Ausgangsbreite zurück. In Förderrichtung hinter der Expansionsstrecke ist eine Entnahmestrecke (4) angeordnet, die in Querrichtung eine Breite aufweist, die im wesentlichen einer Breite des Transportbandes im Bereich des der Entnahmestrecke zugewandten Endes der Expansionsstrecke entspricht. Sowohl die Expansionsstrecke als auch die Entnahmestrecke sind entlang des Förderweges des Transportbandes angeordnet. Das Transportband ist lichtdurchlässig ausgebildet. Unterhalb mindestens eines Teiles der Entnahmestrecke ist eine Beleuchtungseinrichtung (8) angeordnet, die Licht in Richtung auf das Transportband emittiert.

## Beschreibung

Die Erfindung betrifft eine Fördereinrichtung zur Vereinzelung von Produkten, die im wesentlichen als ein flexibles Transportband ausgebildet ist, das die Produkte in einer Fahrrichtung weiterleitet und das entlang eines als Expansionsstrecke ausgebildeten Teiles eines Förderweges in einer Querrichtung von einer Spreizeinrichtung expandierbar ist und das entlang eines Teiles eines Rückführweges auf eine Ausgangsbreite zurückkontrahiert.

Derartige Fördereinrichtungen werden in einer Vielzahl von Produktbereichen eingesetzt, bei denen im Rahmen einer weiteren Verarbeitung oder Verpackung zunächst dichtgedrängt angeordnete Produkte mit einem Abstand zueinander versehen werden müssen. Eine Anwendung kann beispielsweise im Bereich der Schokoladenindustrie erfolgen, wo Schokoladenteile oder Pralinen verpackt werden sollen.

Eine Fördereinrichtung, bei der ein flexibles Transportband zur Vereinzelung der Produkte quer zu einer Transportrichtung verwendet wird, ist beispielsweise in der DE-OS 38 05 870 beschrieben. Gemäß dieser Druckschrift ist die Fördereinrichtung im Bereich eines fahrbaren Wagens angeordnet, der an ein Zuführband herangeschoben werden kann. Im Bereich des einen Endes des Wagens weist das Transportband seine geringste Breitenausdehnung auf und im Bereich des in Förderrichtung anderen Endes ist die größte Breite in Querrichtung vorgesehen. Diese bekannte Vorrichtung hat sich insgesamt gut bewährt, es bestehen jedoch Probleme im Bereich der Übergabe vom Zuführband zur Fördereinrichtung. Darüber hinaus bestehen Probleme bei einer Entnahme der Produkte von der Fördereinrichtung. Diese Probleme resultieren daraus, daß die Vorrichtung für eine Vereinzelung von sehr unterschiedlichen Produkten einsetzbar ist, die sowohl hinsichtlich ihrer Formgestaltung als auch hinsichtlich ihrer Farbgebung und der Produkthelligkeit erheblich variieren. Eine Adaption an diese Produktvielfalt ist bislang nicht mit einfachen Mitteln durchführbar gewesen.

Aufgabe der vorliegenden Erfindung ist es daher, eine Fördereinrichtung der einleitend genannten Art derart zu konstruieren, daß sowohl die Flexibilität als auch die Zuverlässigkeit erhöht wird.

Diese Aufgabe wird erfindungsgemäß dadurch gelöst, daß in Förderrichtung hinter der Expansionsstrecke eine Entnahmestrecke angeordnet ist, die in Querrichtung eine Breite aufweist, die im wesentlichen einer Breite des Transportbandes im Bereich des der Entnahmestrecke zugewandten Endes der Expansionsstrecke entspricht, daß sowohl die Expansionsstrecke als auch die Entnahmestrecke entlang des Förderweges des Transportbandes angeordnet sind, daß das Transportband lichtdurchlässig ausgebildet ist und daß unterhalb mindestens eines Teiles der Entnahmestrecke eine Beleuchtungseinrichtung angeordnet ist, die Licht in Richtung auf das Transportband emittiert.

Die Integration der Expansionsstrecke und der Entnahmestrecke entlang des Förderweges eines einheitlichen Transportbandes vermeidet in einfacher Weise Übergabeprobleme, die aus einer Verwendung von Systemen resultieren, die aus mehreren separaten Komponenten bestehen. Die Verwendung eines geschlossenen und quer-elastischen Bandes ermöglicht eine beliebige Variation der Produktanzahl bzw. der Produktmenge. Aufgrund der lichtdurchlässigen Ausbildung des Transportbandes ist es bei einer Positionserfassung der Produkte möglich, den Kontrastunterschied zwischen dem durchscheinenden Transportband und dem vom Produkt erzeugten Schatten auszunutzen. Unabhängig von der jeweiligen Farbgestaltung des Produktes ist es hierdurch möglich, eine automatische Entnahme des Produktes vom Förderband durch eine Handhabungseinrichtung durchzuführen. Entsprechend der jeweiligen Anwendungsanforderung kann die Fördereinrichtung in jeweils angepaßten Größen bereitgestellt werden.

Zur Ermöglichung einer optimalen Ausnutzung des zur Verfügung stehenden Förderraumes wird vorgeschlagen, daß die Beleuchtungseinrichtung das Transportband im wesentlichen über die gesamte Breite in Querrichtung ausleuchtet.

Zur Bereitstellung eines räumlich ausgedehnten Beleuchtungsfeldes wird vorgeschlagen, daß in Förderrichtung hintereinander mehrere Beleuchtungskörper zur Ausbildung der Beleuchtungseinrichtung angeordnet sind.

Zur weiteren Verbesserung der Führung der Produkte entlang des Förderweges ist vorgesehen, daß in Förderrichtung vor der Expansionsstrecke eine Einlaufstrecke angeordnet ist, die sich im wesentlichen mit konstanter Breite in Förderrichtung erstreckt.

Zur Unterstützung eines endlosen Umlaufweges des Förderbandes ist es zweckmäßig, daß im Bereich eines der Expansionsstrecke abgewandten Übergabeendes der Einlaufstecke eine Umlenkung des Transportbandes angeordnet ist.

Eine Produktübergabe ohne störende Abstände zwischen einem Zuführband und der Fördereinrichtung kann dadurch bereitgestellt werden, daß die Umlenkung als Umlenkklinge ausgebildet ist.

Eine weitere Umlenkung des Transportbandes erfolgt dadurch, daß im Bereich des der Expansionsstrecke abgewandten Endes der Entnahmestrecke eine Umlenkwalze für das Transportband angeordnet ist.

Zur Erleichterung einer Entnahme der Produkte vom Transportband durch die Handhabungseinrichtung wird vorgeschlagen, daß für einen Antrieb des Transportbandes ein Intervallbetrieb vorgesehen ist.

Eine weitere Adaptionsfähigkeit besteht darin, daß zusätzlich zur Spreizeinrichtung, die das Transportband in Querrichtung expandiert, eine Streckeinrichtung zur Expansion des Transportbandes in Förderrichtung vorgesehen ist.

Zur Reduzierung einer Verschmutzungsneigung wird vorgeschlagen, daß das Transportband mindestens bereichsweise mit einer antiadhäsiven Beschichtung versehen ist.

Eine besonders zweckmäßige Materialauswahl besteht darin, daß die Beschichtung aus Silikonkautschuk ausgebildet ist.

In der Zeichnung sind Ausführungsbeispiele der Erfindung schematisch dargestellt. Es zeigen:
- Fig. 1: eine Draufsicht auf eine Fördereinrichtung, bei der in Förderrichtung hintereinander eine Einlaufstrecke, eine Expansionsstrecke und eine Entnahmestrecke angeordnet sind,
- Fig. 2: einen vergrößerten Querschnitt im Bereich der Entnahmestrecke,
- Fig. 3: ein vereinfachtes Blockdiagramm zur Veranschaulichung der Funktion des Handhabungsgerätes und
- Fig. 4: eine vereinfachte Seitenansicht einer Zuordnung der Fördereinrichtung in Relation zu einem Zuführband.

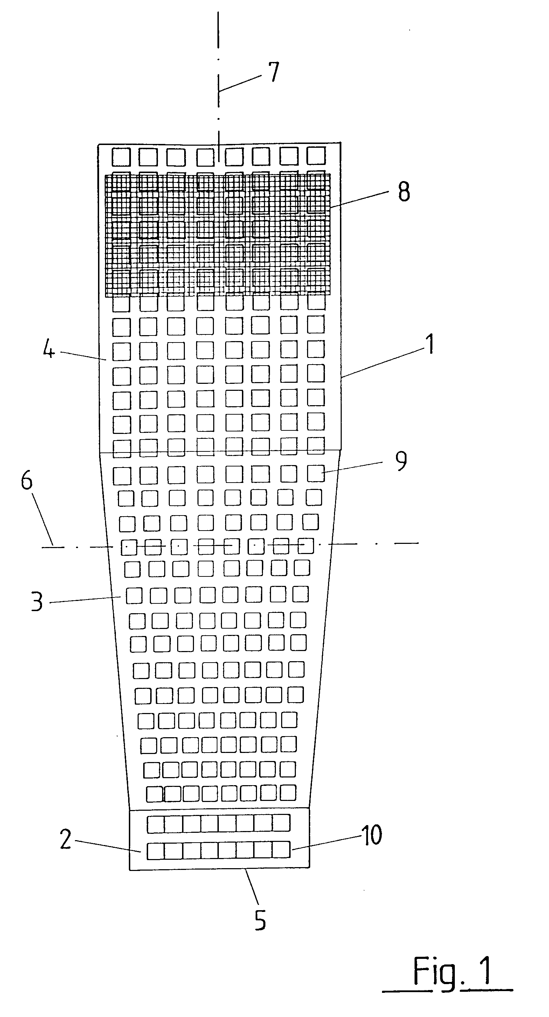

Aus der Darstellung in Fig. 1 ist ersichtlich, daß die Fördereinrichtung im wesentlichen aus einem Transportband 1 besteht, das nacheinander eine Einlaufstrecke 2, eine Expansionsstrecke 3 und eine Entnahmestrecke 4 durchläuft. Ausgehend von einem Übergabeende 5 verläuft die Einlaufstrecke 2 in Richtung auf die Expansionsstrecke 3 zunächst mit einer im wesentlichen konstanten Breite. Die Expansionsstrecke 3 erweitert sich ausgehend von der Breite der Einlaufstrecke 2 in Richtung auf die Entnahmestrecke 4 im wesentlichen kontinuierlich. Die Erweiterung der Expansionsstrecke 3 in einer Querrichtung 6, die im wesentlichen senkrecht zu einer Förderrichtung 7 ausgerichtet ist, erfolgt durch eine Dehnung des Transportbandes 1 in der Querrichtung 6. Die Dehnung kann durch eine Spreizeinrichtung hervorgerufen werden, die beispielsweise durch ineinander eingreifende Haken und Ösen mit dem Transportband 1 verbunden ist. Grundsätzlich sind aber auch andere Verbindungsmittel denkbar, um die Querdehnung des Transportbandes 1 hervorzurufen.

Im Bereich seiner der Einlaufstrecke 2 abgewandten Ausdehnung ist die Expansionsstrecke 3 in die Entnahmestrecke 4 übergeleitet. Unterhalb eines Teiles der Entnahmestrecke 4 ist eine Beleuchtungseinrichtung 8 angeordnet, die Licht durch das lichtdurchlässige Material des Transportbandes 1 hindurch emittiert.

Auf dem Transportband 1 sind Produkte 9 angeordnet. Gemäß Fig. 1 ist vorgesehen, daß die Produkte 9 in Produktreihen 10 auf das Transportband 1 gelangen. In Förderrichtung 7 weisen die Produktreihen 10 einen Abstand auf. Im Bereich der Einlaufstrecke 2 stehen die Produkte in Querrichtung 6 unmittelbar oder in geringem Abstand nebeneinander. Der Abstand der Produkte 9 in Querrichtung 6 nimmt durch die Expansion des Transportbandes 1 in Querrichtung 6 im Bereich der Expansionsstrecke 3 bei zunehmendem Transport in Förderrichtung 7 zu. Im Bereich der Entnahmestrecke 4 weisen die Produkte 9 hierdurch sowohl im Förderrichtung 7 als auch in Querrichtung 6 einen vorgebbaren Abstand zueinander auf.

Fig. 2 veranschaulicht, daß die Produkte 9 aus dem Bereich des Transportbandes 1 von einer Handhabungseinrichtung 11 entnommen werden können. Die Handhabungseinrichtung 11 weist einen Roboterarm 12 auf, an dem eine Greifeinrichtung 13 installiert ist. Im Bereich der Greifeinrichtung 13 ist ein optischer Sensor 14 angeordnet, der aufgrund der abschattenden Wirkung der Produkte 9 Kontrastunterschiede der Schatten der Produkte 9 relativ zum durchscheinenden Transportband 1 erkennt und hierdurch die Position der Produkte 9 exakt erfaßt. Aufgrund der Meßdaten des Sensors 14 erfolgt eine Steuerung der Greifeinrichtung 13.

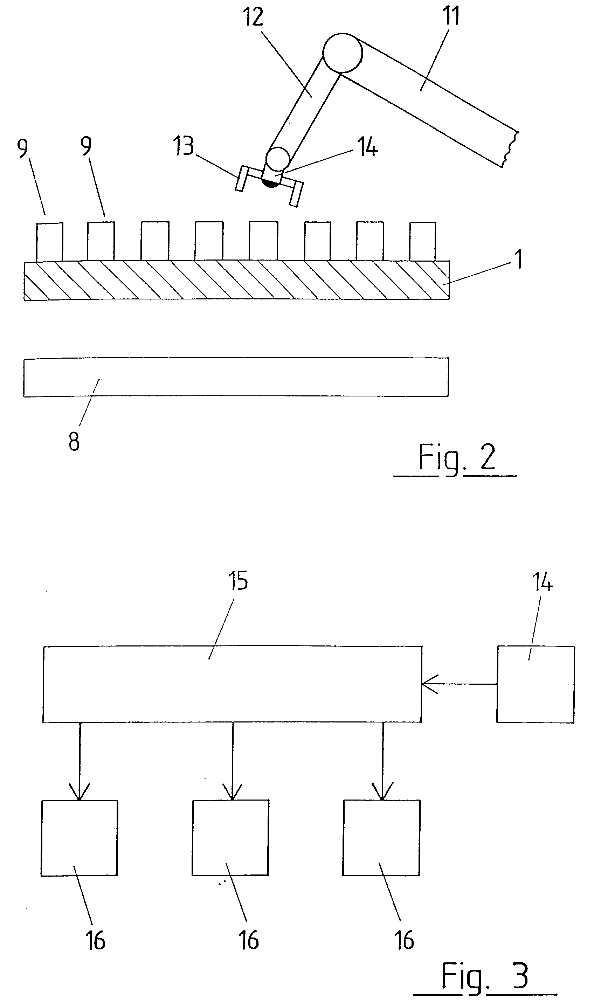

Die Steuerung der Handhabungseinrichtung 11 erfolgt entsprechend dem vereinfachten Schaltschema in Fig. 3. Der optische Sensor 14 übermittelt seine Meßdaten an eine Steuereinrichtung 15, die Antriebsmotore 16 der Handhabungseinrichtung 11 koordiniert. Es sind beispielsweise Antriebsmotore 16 für Drehbewegungen der Roboterarme 12 und Positionierbewegungen der Greifeinrichtung 13 vorgesehen. Die Antriebsmotore 16 können als elektrische Antriebe ausgebildet sein, grundsätzlich sind aber auch beispielsweise pneumatische oder hydraulische Antriebe denkbar.

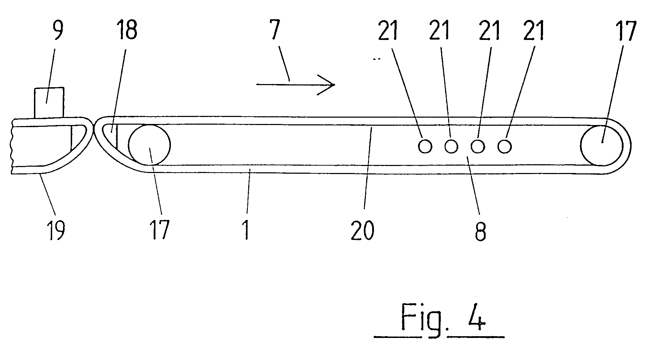

Aus der schematischen Seitenansicht in Fig. 4 ist ersichtlich, daß zur Umlenkung des Transportbandes 1 Umlenkwalzen 17 vorgesehen sind. Im Bereich des Übergabeendes 5 ist eine Umlenkklinge 18 angeordnet, die eine Umlenkung des Transportbandes 1 mit einem geringen Krümmungsradius ermöglicht. Hierdurch ist eine präzise Übergabe von Produkten 9 von einem Zuführband 19 zum Transportband 1 möglich.

Eine großflächige Beleuchtung einer Unterseite 20 des Transportbandes 1 mit Hilfe der Beleuchtungseinrichtung 8 kann dadurch erfolgen, daß die Beleuchtungseinrichtung 8 aus mehreren Beleuchtungskörpern 21 ausgebildet ist, die in Förderrichtung 7 hintereinander angeordnet sind. Die Beleuchtungskörper 21 können beispielsweise als Leuchtstoffröhren ausgebildet sein.

Als Material für das Transportband 1 können unterschiedliche lichtdurchlässige und elastische Substanzen verwendet werden. Es sind sowohl transparente als auch Licht mattdurchscheinend weiterleitende Substanzen einsetzbar. Durch die elastische Ausbildung des Transportbandes 1 ist es grundsätzlich auch möglich, zusätzlich zur Dehnung in Querrichtung 6 eine zusätzliche Dehnung in Förderrichtung 7 zu erzeugen, um auch den Abstand der Produkte 9 in Förderrichtung 7 zu beeinflussen.

Die Reinigungseigenschaften können dadurch günstig beeinflußt werden, daß das Transportband 1 mit einer antiadhäsiven Beschichtung versehen wird. Als Substanz für die Beschichtung kann beispielsweise Silikonkautschuk verwendet werden. Eine derartige Beschichtung ist insbesondere dann von Bedeutung, wenn Produkte 9 gefördert werden, die klebrige oder haftende Eigenschaften aufweisen. Dies ist insbesondere im Bereich der Süßwarenindustrie gegeben.

## Patentansprüche

1. Fördereinrichtung zur Vereinzelung von Produkten, die im wesentlichen als ein flexibles Transportband ausgebildet ist, das die Produkte in einer Förderrichtung weiterleitet und das entlang eines als Expansionsstrecke ausgebildeten Teiles eines Förderweges in einer Querrichtung von einer Spreizeinrichtung expandiert ist und das entlang eines Teiles eines Rückführweges auf eine Ausgangsbreite zurückkontrahiert, dadurch gekennzeichnet, daß in Förderrichtung (7) hinter der Expansionsstrecke (3) eine Entnahmestrecke (4) angeordnet ist, die in Querrichtung (6) eine Breite aufweist, die im wesentlichen einer Breite des Transportbandes (1) im Bereich des der Endnahmestrecke (4) zugewandten Endes der Expansionsstrecke (3) entspricht, daß sowohl die Expansionsstrecke (3) als auch die Entnahmestrecke (4) entlang des Förderweges des Transportbandes (1) angeordnet sind, daß das Transportband (1) lichtdurchlässig ausgebildet ist und daß unterhalb mindestens eines Teiles der Entnahmestrecke (4) eine Beleuchtungseinrichtung (8) angeordnet ist, die Licht in Richtung auf das Transportband (1) emittiert.

2. Fördereinrichtung nach Anspruch 1, dadurch gekennzeichnet, daß die Beleuchtungseinrichtung (8) das Transportband (1) im wesentlichen über die gesamte Breite in Querrichtung (6) ausleuchtet.

3. Fördereinrichtung nach Anspruch 1 oder 2, dadurch gekennzeichnet, daß in Förderrichtung (7) hintereinander mehrere Beleuchtungskörper (21) zur Ausbildung der Beleuchtungseinrichtung (8) angeordnet sind.

4. Fördereinrichtung nach einem der Ansprüche 1 bis 3, dadurch gekennzeichnet, daß in Förderrichtung (7) vor der Expansionsstrecke (3) eine Einlaufstrecke (2) angeordnet ist, die sich im wesentlichen mit konstanter Breite in Förderrichtung (7) erstreckt.

5. Fördereinrichtung nach einem der Ansprüche 1 bis 4, dadurch gekennzeichnet, daß im Bereich eines der Expansionsstrecke (3) abgewandten Übergabeendes (5) der Einlaufstecke (2) eine Umlenkung des Transportbandes (1) angeordnet ist.

6. Fördereinrichtung nach Anspruch 5, dadurch gekennzeichnet, daß die Umlenkung als Umlenkklinge (18) ausgebildet ist.

7. Fördereinrichtung nach einem der Ansprüche 1 bis 6, dadurch gekennzeichnet, daß im Bereich des der Expansionsstrecke (3) abgewandten Endes der Entnahmestrecke (4) eine Umlenkwalze (17) für das Transportband (1) angeordnet ist.

8. Fördereinrichtung nach einem der Ansprüche 1 bis 7, dadurch gekennzeichnet, daß für einen Antrieb des Transportbandes (1) ein Intervallbetrieb vorgesehen ist.

9. Fördereinrichtung nach einem der Ansprüche 1 bis 8, dadurch gekennzeichnet, daß zusätzlich zur Spreizeinrichtung, die das Transportband (1) in Querrichtung (6) expandiert, eine Streckeinrichtung zur Expansion des Transportbandes (1) in Förderrichtung (7) vorgesehen ist.

10. Fördereinrichtung nach einem der Ansprüche 1 bis 9, dadurch gekennzeichnet, daß das Transportband (1) mindestens bereichsweise mit einer antiadhäsiven Beschichtung versehen ist.

11. Fördereinrichtung nach Anspruch 10, dadurch gekennzeichnet, daß die Beschichtung aus Silikonkautschuk ausgebildet ist.
